# EUROPEAN PATENT APPLICATION

(11) **EP 1 321 269 A1**
(43) Date of publication of application: **25.06.2003**
(21) Application number: 01610129.7
(22) Date of filing: 19.12.2001
(51) Int. Cl.: B29C 37/00, B29C 45/14

(54) **Method for providing a lacquered plastics part and plastic part provided by the method**

(71) Applicant: Sony Ericsson Mobile Communications AB, 221 88 Lund (SE)
(72) Inventor: Wahlund, Jesper, 291 66 Kristianstad (SE); Rosengren, Peter, 245 61 Staffanstorp (SE)
(74) Representative: Sundien, Thomas

(57) **Abstract**

A method of providing an injection moulded plastics part (5) for a device (1). The plastics part (5) is provided by injection moulding in an injection mould comprising at least two mould parts (9,10), and it is provided with a lacquer (15) on at least one surface. The injection moulded plastics part (5) is provided with the lacquer (15) before it is ejected from the injection mould. The invention furthermore relates a plastics part manufactured by the described method.

## Description

### Technical field

The invention relates to a method of providing an injection moulded plastics part for a device, said plastics part being provided by injection moulding in an injection mould comprising at least two mould parts, and said plastics part being provided with a lacquer on at least one surface.

The invention also relates to a plastics part provided by such method.

### Related prior art

Such plastics parts are typically manufactured in two steps in two different locations. The first step comprises injection moulding of the plastics part by any generally known injection moulding technique, and the second step comprises lacquering of the plastics part by any generally known technique.

Since the two steps are performed in different locations, the injected moulded plastics parts must be transported from the injection moulding facility to the lacquering facility. These two facilities may be located in the same factory plant, but often the injection moulded plastics parts must be transported between two different manufacturers: a first manufacturer specialised in injection moulding of plastics parts and a second manufacturer specialised in lacquering. In all circumstances transportation of the injection moulded plastic parts is necessary, which means that the injection moulded plastics parts must be handled either manually or automatically or by any combination thereof.

During handling and transportation of the injection moulded, but not yet lacquered, plastics parts, there is a great risk that the injection moulded plastics parts become contaminated or damaged and must be discarded due to the high requirements to cleanness and smoothness of the surfaces to be lacquered. The result is that a relatively large number of injection moulded plastics parts must be discarded which contributes adversely to profitability. Furthermore, the costs associated with transportation of the injection moulded plastics parts also contribute adversely to profitability.

US patent No. 4 855 347 discloses a method of producing a polyurethane-based moulded article that is coated with an in-mould, mould-releasable and re-coatable lacquer. The method is particularly concerned with producing polyurethane-based moulded articles which are typically substantially larger than the plastics parts for communications devices dealt with in this application.

### Object of the invention

It is an object of the invention to reduce the manufacturing costs of injection moulded plastics parts for communications devices provided with a lacquer on at least a part of the surface.

### Summary of the invention

The object of the invention is achieved by providing the injection moulded plastics part with a lacquer before it is ejected from the injection mould.

Thereby it is obtained that the transportation of the injection moulded plastics part from an injection moulding facility to a distant lacquering facility is eliminated. The number of plastics parts that must be discarded is thereby minimised considerably.

According to a first embodiment of the invention the method comprises the following steps:
- closing the injection mould;
- injecting a melted plastics material into the closed injection mould;
- opening the injection mould by removing at least one mould part, while the injection moulded plastics part is still in at least one other mould part;
- applying the lacquer to a surface of the injected moulded plastics part;
- curing the lacquer;
- ejecting the plastics part provided with the lacquer from the at least one other mould part.

In this embodiment the plastics part is injection moulded and subsequently the lacquer is applied.

According to a second embodiment of the invention the method comprises the following steps:
- applying the lacquer to at least a part of an interior surface of at least one mould part;
- curing the lacquer;
- closing the injection mould;
- injecting a melted plastics material into the closed injection mould;
- opening the injection mould;
- ejecting the plastics part provided with the lacquer from the injection mould.

In this embodiment lacquer is initially applied to the interior surface of the mould and subsequently the plastics part is injection moulded. This method requires a lacquer that does not adhere to the mould part or, alternatively, a release agent must be applied to the mould before the lacquer is applied. In the first embodiment of the invention there are no particular requirements to the lacquer.

The lacquer is preferably applied by means of a precision application method whereby it is possible to apply the lacquer precisely where it is desired without the use of masking.

The precision application method comprises in a first embodiment a piezoelectric lacquer jet in which a piezoelectric transducer pushes and pulls a diaphragm adjacent a firing chamber with a small opening for creating small droplets of lacquer with a predetermined application speed and direction.

In a second embodiment the precision application method comprises a thermal lacquer jet in which a resistor rapidly heats a thin layer of the lacquer for vaporising a small fraction of the lacquer to form an expanding bubble that ejects a droplet through a small opening in a predetermined direction.

In a third embodiment the precision application method comprises a continuous lacquer jet in which pressure is used to generate a steady stream of lacquer and in which droplets of the lacquer are deflected by use of an electric field.

With either of these methods using generally known "ink jet" technology it is possible to obtain a predetermined lacquer pattern in the desired area of the plastics part.

The lacquer may also be applied by means of any conventional lacquering method such as by atomising the lacquer by means of air or gas, or by a tampo printing method.

In a preferred embodiment the plastics part is a part for a communications device, which preferably is a mobile radio station, such as a mobile telephone, and the plastics part is a display window therefor.

It shall be emphasised that the term "comprise/comprising" when used in this specification is taken to specify the presence of stated features, integers, steps or components but does not preclude the presence or addition of one or more other features, integers, steps components or groups thereof.

### Description of the drawings

The invention will be described in detail in the following with reference to the drawings in which
Fig. 1 shows an electronic communications device in the form of a mobile telephone;
Fig. 2 shows a display window for the mobile telephone shown in Fig. 1;
Figs 3a-3d show four steps of a first manufacturing method according to the invention;
Fig. 4 shows the principle of a piezoelectric lacquer jet for use in a method according to the invention;
Figs 5a and 5b show the principle of a thermal lacquer jet for use in a method according to the invention;
Fig. 6 shows the principle of a continuous lacquer jet for use in a method according to the invention; and
Figs 7a-7d show four steps of a second manufacturing method according to the invention.

### Detailed description of an embodiment of the invention

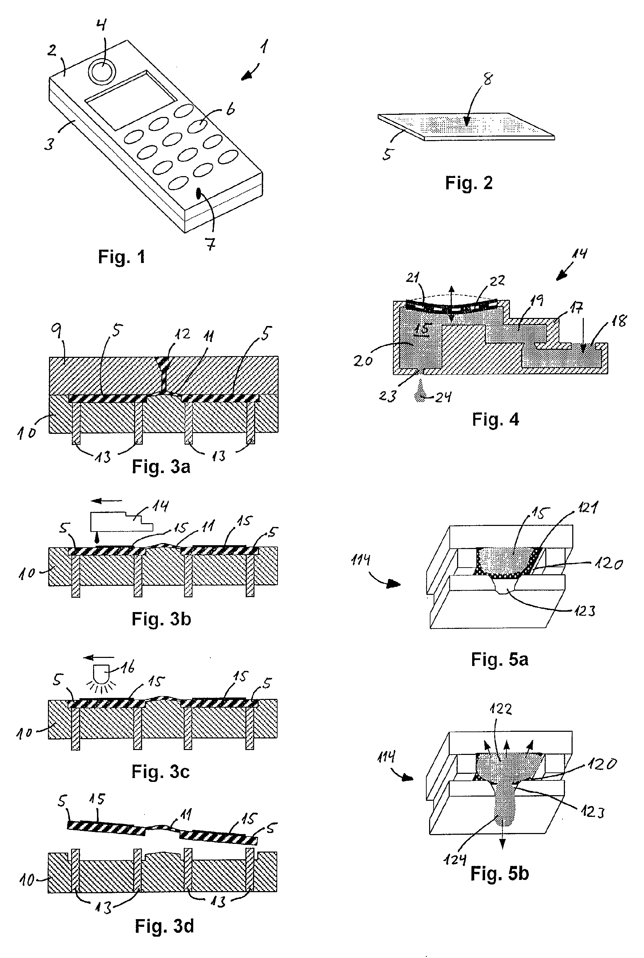

Fig. 1 shows an electronic communications device in the form of a mobile telephone 1. The mobile telephone 1 comprises a front cover 2 and a back cover 3 which may both be made of a plastics material. The mobile telephone 1 also comprises a loudspeaker 4, a display window 5, a number of depressible keys 6 and a microphone 7. Other features may be present as it is known in the art of mobile telephones.

In such mobile telephones 1 it is known to provide the surfaces of some of the plastics parts with a layer of lacquer. The lacquer may be applied for aesthetical and/or protective reasons. For example, a raw plastics surface may be given an improved appearance by treating it with a lacquer, and a plastics component may be given improved resistance to wear and chemicals by providing a protective layer of lacquer on the surface thereof.

An example of a part that is typically provided with a layer of lacquer is the display window 5 of the mobile telephone 1. An example of a display window is shown in Fig. 2. The display window is preferably made by an ordinary injection moulding technique in which a transparent plastics material, such as polycarbonate or PMMA, is injected into a mould comprising at least two mould parts that abut on each other. According to the prior art the injection moulded display window 5 is transported to a lacquerer that applies a layer lacquer 8 to at least a part of the surface of the display window 5 as shown in Fig. 2. The lacquer 8 may be provided for aesthetical and/or protective reasons as mentioned above.

The lacquered display window 5 is then transported to the assembling factory that mounts the display window 5 in the mobile telephone 1.

As mentioned above, there is a huge risk that the display windows 5 becomes contaminated or damaged during handling and transportation from the injection-moulding factory to the lacquerer, and a relatively large number of display windows 5 must be discarded of this reason. The present invention relates to a method that eliminates this risk, and a first manufacturing method according to the invention is shown in four steps in Figs 3a-3d.

In the first step shown in Fig. 3a, the injection mould, which comprises an upper mould part 9 and a lower mould part 10, is closed and the heated plastics material is injected into the closed mould. The plastics material is distributed in the closed mould to form a plurality of display windows 5 that, via ribs 11 formed by distribution channels, are connected with the sprue 12. The ribs 11 also interconnect the plurality of display windows 5, but are to be disconnected therefrom and to be discarded after the injection moulded display windows 5 have been ejected from the mould.

The lower mould part 10 is provided with ejectors 13 that eject the finished display windows 5 from the lower mould part 10 as described below.

After injection moulding of the display windows 5 the upper mould part 9 is removed as shown in Fig. 3b. The display windows 5 are, however, maintained in the lower mould part 10 which acts as a support therefor. In the shown embodiment, the display windows 5 are still interconnected by the ribs 11.

A lacquer jet 14 is then displaced above the display windows 5 while applying a layer of lacquer 15 on selected areas of the display windows 5. The lacquer jet 14 preferably uses the well-known "ink-jet technology" which may also be called "a precision application method" since it is possible to apply the lacquer in a very precise manner on predetermined areas. Different preferred devices for a lacquer jet will be described later with reference to Figs 4-6.

The lacquer 15 is preferably a UV-curable lacquer 15 that is cured by exposing the lacquer 15 to UV light emitted from a UV lamp 16 as shown in Fig. 3c. The UV lamp 16 is displaced above the lower mould part 10 with the display windows 5.

When the lacquer 15 is cured, the display windows 5 are ejected from the lower mould part 10 by means of the ejectors 13 as shown in Fig. 3d. The display windows 5 are then disconnected from the ribs 11 and are ready to be mounted in the mobile phone 1.

As mentioned above, the lacquer jet may be of any suitable type of which three will be described below with reference to Figs 4-6.

Fig. 4 shows the fundamental principle of a piezoelectric lacquer jet 14 corresponding to the lacquer jet shown in Fig. 3b. The piezoelectric lacquer jet 14 comprises a housing 17 provided with an inlet opening 18 for the lacquer 15 and a duct 19 leading to a firing chamber 20. The firing chamber 20 is provided with a piezoelectric transducer 21 associated with a flexible diaphragm 22 and with a small outlet opening 23 opposite the flexible diaphragm 22. When electric current is applied to the piezoelectric transducer 21 it pushes and pulls the diaphragm 22 adjacent the firing chamber, whereby small droplets 24 of lacquer are expelled through the small outlet opening 23 with a predetermined application speed and direction.

The lacquer jet may be a thermal lacquer jet 114 as shown in Figs 5a-5b. A thermal lacquer jet 114 also comprises a firing chamber 120 into which an amount of lacquer 15 is supplied as shown in Fig. 5a. A resistor 121 provided in the firing chamber 120 rapidly heats a thin layer of the lacquer 15 for vaporising a small fraction of the lacquer 15 to form an expanding bubble 122 that ejects a droplet 124 through a small opening 123 in a predetermined direction. This is shown in Fig. 5b.

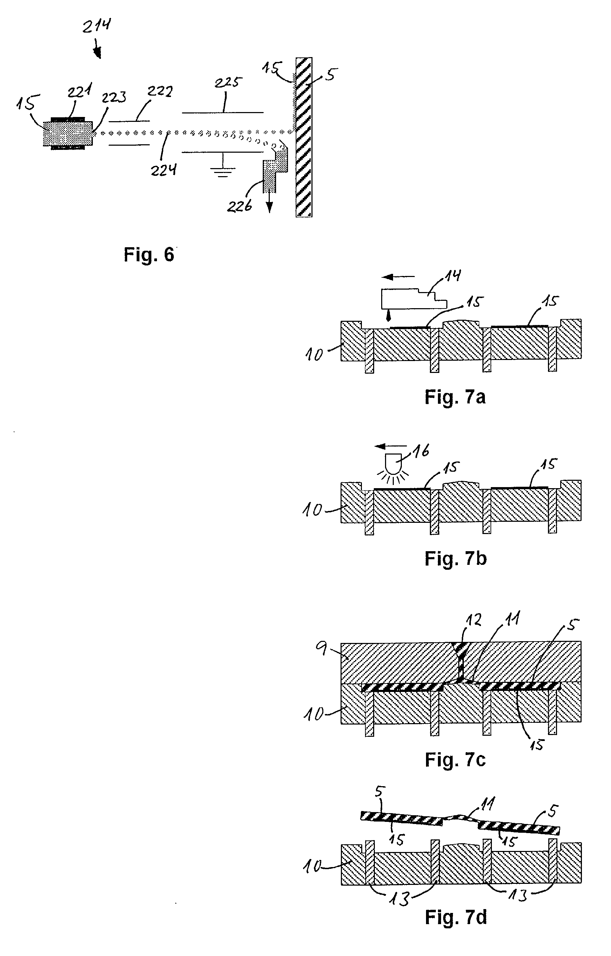

The lacquer jet may also be a continuous lacquer jet 214 as shown schematically in Fig. 6. In a continuous lacquer jet 214 a pressure is used to generate a steady stream of lacquer droplets 224 formed in a drop generator 221 provided with a small opening 223. The droplets 224 are electrically charged by means of a charge electrode 222 and a high voltage deflection plate 225 is used to deflect the charged droplets 224 in order to direct the droplets 224 to the surface of the plastics part 5. A gutter 226 is provided for catching deflected droplets 224 when the continuous lacquer jet 214 passes areas of the plastics part 5 where no lacquer 15 is to be applied. The droplets 224 that are caught by the gutter 226 are re-circulated to the drop generator 221.

The lacquer may also be applied by means of any conventional lacquering method such as by atomising the lacquer by means of air or gas, or by a tampo printing method. A masking of the plastics part 5 may be necessary when using the atomising method.

Figs 7a-7d show four steps of a second manufacturing method according to the invention. Since this second method comprises the same elements as the first method described with reference to Figs 3a-3d, the same reference numerals are used for like parts.

In the first step shown in Fig. 7a, the injection mould is kept opened since only the lower part 10 thereof is employed. The lower part 10 of the injection mould comprises recesses that form parts of the mould cavities when the upper mould part 9 abuts on the lower mould part 10 as shown in Fig. 7c.

A lacquer jet 14 is displaced above the lower mould part 10 while applying a layer of lacquer 15 on selected areas of the mould part, i.e. on selected areas of the mould cavities. The lacquer jet 14 preferably uses the well-known "ink-jet technology" which may also be called "a precision application method" since it is possible to apply the lacquer in a very precise manner on predetermined areas. Different preferred devices for a lacquer jet are described above with reference to Figs 4-6.

The lacquer 15 is preferably a UV-curable lacquer 15 that is cured by exposing the lacquer 15 to UV light emitting from a UV lamp 16 as shown in Fig. 7b. The UV lamp 16 is displaced above the lower mould part 10 provided with the lacquer 15.

When the lacquer is cured, the injection mould is closed by means of an upper mould part 9 as shown in Fig. 7c, and a heated plastics material is injected into the closed mould. The plastics material is distributed in the closed mould to form a plurality of display windows 5 upon the lacquer 15 already provided on the interior surface of the lower mould part 10. The display windows 5 are connected with the sprue 12 via ribs 11 formed by distribution channels. The ribs 11 also interconnect the plurality of display windows 5, but are to be disconnected therefrom and to be discarded after the injection moulded display windows 5 have been ejected from the mould.

After injection moulding of the plastics material, the mould is opened and the finished display windows 5 are ejected therefrom by means of ejectors 13 provided in the lower mould part 10 as shown in Fig. 7d. The display windows 5 are then disconnected from the ribs 11 and are ready to be mounted in the mobile phone 1.

In this method, where the lacquer 15 is applied directly to the interior surface of the lower mould part 10, the lacquer is preferably of a type that does not adhere to the surfaces of the mould part. Thereby the finished display windows 5 are easily ejected from the mould part. If the lacquer 15 is not of this type, a release agent must be applied to the interior surfaces of the mould part before the lacquer 15 is applied.

The invention has been described with particular reference to display windows for mobile telephones. It is obvious, however, that the method is applicable to any other kind of injection moulded plastics parts for a device, and especially for a communications device.

Furthermore, the injection mould has been described as comprising an upper mould part and a lower mould part. However, the words "upper" and "lower" refer only to the orientations shown in the drawings, and it is clear that any suitable orientation of the mould parts is applicable.

## Claims

1. A method of providing an injection moulded plastics part (5) for a device (1), said plastics part (5) being provided by injection moulding in an injection mould comprising at least two mould parts (9,10), and said plastics part (5) being provided with a lacquer (15) on at least one surface, **characterised in that** the injection moulded plastics part (5) is provided with a lacquer (15) before it is ejected from the injection mould.

2. A method according to claim 1, **characterised in that** the method comprises the following steps:
- closing the injection mould;
- injecting a melted plastics material into the closed injection mould;
- opening the injection mould by removing at least one mould part (9), while the injection moulded plastics part (5) is still in at least one other mould part (10);
- applying the lacquer (15) to a surface of the injected moulded plastics part (5);
- curing the lacquer (15);
- ejecting the plastics part (5) provided with the lacquer (15) from the at least one other mould part (10).

3. A method according to claim 1, **characterised in that** the method comprises the following steps:
- applying the lacquer (15) to at least a part of an interior surface of at least one mould part (10);
- curing the lacquer (15);
- closing the injection mould;
- injecting a melted plastics material into the closed injection mould;
- opening the injection mould;
- ejecting the plastics part (5) provided with the lacquer (15) from the injection mould.

4. A method according to any one of claims 1-3, **characterised in that** the lacquer (15) is applied by means of a precision application method.

5. A method according to claim 4, **characterised in that** the precision application method comprises a piezoelectric lacquer jet (14) in which a piezoelectric transducer (21) pushes and pulls a diaphragm (22) adjacent a firing chamber (20) with a small opening (23) for creating small droplets (24) of lacquer (15) with a predetermined application speed and direction.

6. A method according to claim 4, **characterised in that** the precision application method comprises a thermal lacquer jet (114) in which a resistor (121) rapidly heats a thin layer of the lacquer (15) for vaporising a small fraction of the lacquer (15) to form an expanding bubble (122) that ejects a droplet (124) through a small opening (123) in a predetermined direction.

7. A method according to claim 4, **characterised in that** the precision application method comprises a continuous lacquer jet (214) in which pressure is used to generate a steady stream of lacquer droplets (224) which are electrically charged by means of a charge electrode (222) and deflected by means of a high voltage deflection plate (225).

8. A method according to any one of claims 1-3, **characterised in that** the lacquer is applied by atomising the lacquer by means of air or gas.

9. A method according to any one of claims 1-3, **characterised in that** the lacquer is applied by a tampo printing method.

10. A method according to any one of claims 1-9, **characterised in that** the plastics part (5) is a part for a communications device.

11. A method according to claim 10, **characterised in that** the communications device is a mobile radio station, such as a mobile telephone (1).

12. A method according to claim 11, **characterised in that** the plastics part is a display window (5).

13. An injection moulded plastics part provided with a lacquer on at least one surface, **characterised in that** the plastics part is manufactured by a method according to any one of claims 1-12.
